(19) Europäisches Patentamt
European Patent Office
Office européen des brevets

(11) Veröffentlichungsnummer: **0 007 608**
**B2**

# (12) NEUE EUROPÄISCHE PATENTSCHRIFT

(45) Veröffentlichungstag der neuen Patentschrift: **12.10.88**

(51) Int. Cl.⁴: **C 08 K 3/34,** C 08 L 23/00

(21) Anmeldenummer: **79102596.8**

(22) Anmeldetag: **23.07.79**

(54) **Thermoplastischer Masterbatch zur Herstellung von Kunststoff-Folien mit Antiblocking-Eigenschaften.**

(30) Priorität: **01.08.78 DE 2833675**

(43) Veröffentlichungstag der Anmeldung:
**06.02.80 Patentblatt 80/3**

(45) Bekanntmachung des Hinweises auf die Patenterteilung:
**17.11.82 Patentblatt 82/46**

(45) Bekanntmachung des Hinweises auf die Entscheidung über den Einspruch:
**12.10.88 Patentblatt 88/41**

(84) Benannte Vertragsstaaten:
**AT BE CH DE FR GB IT NL SE**

(73) Patentinhaber: **Degussa Aktiengesellschaft, Weissfrauenstrasse 9, D-6000 Frankfurt am Main 1 (DE)**

(72) Erfinder: **Bode, Rudolf, Dipl.- Phys., Wemmstrasse 33, D-6482 Bad Orb (DE)**
Erfinder: **Reisert, Arthur, Alzenauerstrasse 27a, D-8756 Kahl (DE)**
Erfinder: **Türk, Günter, Dr. Dipl.- Chem., Liesingstrasse 3, D-6450 Hanau (DE)**
Erfinder: **Strack, Hans, Dr. Dipl.- Chem., Siedlungstrasse 26, D-8755 Alzenau (DE)**

(56) Entgegenhaltungen:
**DE-A-2 132 510**
**DE-A-2 326 862**
**DE-A-2 530 979**
**FR-A-2 171 981**
**GB-A-946 324**
**GB-A-1 092 600**
**US-A-2 867 605**
**US-A-2 956 035**
**US-A-3 876 608**
**US-A-3 884 870**
**US-A-4 000 100**

**CHEMICAL ABSTRACTS, vol. 81, Nr. 14, /. Oktober 1974, Seite 42, Zusammenfassung 78791a. Columbus, Ohio, USA**
**CHEMICAL ABSTRACTS, vol. 83, Nr. 10, 8. September 1975, Seite 82, Zusammenfassung 80730q. Columbus, Ohio, USA**

(56) Entgegenhaltungen: (Fortsetzung)
**CA 81 (Nr. 14) 78791a (1974) - JA-OS 74/23 245**
**CA 83 (Nr. 10) 80 7309 (1975) = JA-OS 75/16 744**
**JA-002034 (Derwent-Blatt 12.10.1977 Nr. 62 062 y/35**
**JA-066328 (Derwent-Blatt 29.07.1975) Nr. 41 843 W/25 = JA-OS 75/10 744**
**JA-063 266 (derwent-Blatt 10.12.1974) Nr. 76 374 V/44 = JA-OS 49-23245**
**Firmenschrift "Molecular Sieves"**
**Breck, "Zeolite Molecular Sieves", 1974, Seiten 449-451, 600-601, 746-747**
**Technical Bulletin Shell PP/38**
**Grace Information MS 2, 1969**

**EP 0 007 608 B2**

LIBER, STOCKHOLM 1988

**Beschreibung**

Die Erfindung betrifft einen thermoplastischen Masterbatch zur Herstellung von Kunststoff-Folien mit Antiblocking-Eigenschaften.

Bei der Herstellung von z. B. Schlauchfolien aus thermoplastischen Kunststoffen bzw. Kunststoffmischungen wird eine Schmalze dieser thermoplastischen Mischungen durch eine Ringschlitzdüse zu einem Schlauch extrudiert, dieser aufgeblasen, gekühlt, flachgelegt und aufgewickelt.

Bei der Herstellung von Folien wird es bekanntlich als ein besonders wichtiges Erfordernis angesehen, das Aneinanderhaften (Blocking) der Folien zu verhindern.

So ist gemäß der DE-AS-1 210 177 (UCC) ein Verfahren zur Herstellung von nich transparenten Polyäthylenfolien bekannt, bei welchem ein fein zerteilter $SiO_2$-haltiger Stoff mit einer Teilchengröße von 0,5 bis 7 Mikrometer in die zu extrudierende Mischung eingeknetet wird, wodurch ein Blocken der Folien verhindert werden kann.

Gemäß dieser DE-AS-1 210 177 können als $SiO_2$-haltige Stoffe Diatomeenerde, handelsübliche Kieselsäure und Kieselgele eingesetzt werden, deren Teilchengrößenverteilung innerhalb dieses Bereiches liegt.

Aus der US-PS-4 029 631 (Allied Chemical Corp.) ist es bekannt, in Polyäthylenterephthalate als Antiblocking-Mittel ein amorphes Siliciumdioxid einzumischen.

Aus der DE-AS-1 232 337 (Kurashiki Rayon Comp.) ist es bekannt, bei der Herstellung von Folienbahnen aus Polyvinylalkohol auf die Oberfläche beider Folienbahnen ein das Blocken verhinderndes Pulver, bestehend aus wasserfreier Kieselsäure mit einem Reinheitsgrad von 99,9 % und einer Korngröße von 4 bis 13 Nanometern, aufzustäuben.

Aus der DE-AS-1 247 641 (UCC) ist es bekannt, in thermoplastische Mischungen zur Herstellung von Folien aus Polyäthylen als Füllstoffe Diatomeenerde, handelsübliche Kieselerden, Silikate, Kieselgele, Kiesel-Tonerde und Asbeste einzukneten.

Gemäß der JP-A-7 515 744 ist es bekennt, axial gereckte Polypropylenfolien mit guter Transparenz und befriedigenden Antiblocking-Eigenschaften herzustellen, indem mineralische Zeolithe in Mengen von 0,05 bis 0,5 Gew.-% dem Polypropylen direkt und ohne Batchherstellung zugesetzt werden.

Gemäß der JP-A-7 423 245 ist es bekannt, Massen, bestehend aus Polypropylen oder Copolymeren des Propylens mit anderen $\alpha$-Olefinen, Zeolithpulver mit einer mittleren Korngröße unter 20 Mikrometerin einer Menge von 0,01 bis 5,0 Gew.-% zuzusetzen.

Die bekannten thermoplastischen Mischungen weisen jedoch den Nachteil auf, daß sie als Antiblocking-Mittel Stoffe enthalten, welche vor ihrem Einkneten in aufwendigen Trocknungsprozessen nahezu wasserfrei gemacht werden müssen, da die Anwesenheit von Feuchtigkeit in der thermoplastischen Mischung die Bildung von Blasen bei den gegebenen Verarbeitungstemperaturen verursacht.

Aufgabe der Erfindung ist es, einen thermoplastische Masterbatch mit einem anorganischen Füllstoff zu finden, welche in einer Kunststoff-Folie einen guten Antiblocking-Effekt aufweist und deren anorgenische Füllstoftkomponente nicht auf einen wasserfreien Zustand getrocknet werden muß. Gegenstand der Erfindung ist ein thermoplastischer Masterbatch zur Herstellung von Kunststoffolien mit Antiblocking-Eigenschaften auf Basis von Polyäthylen, welcher dadurch gekennzeichnet ist, daß er 20 bis 60 Gew.-% eines synthetischen, pulverförmigen Zeolithen des Typs A, des Typs Y, des Typs X, des Typs P und/oder des Typs Hydroxysodalith, welcher eine Teilchengröße von 0,5 bis 20 Mikrometer und einen Wassergehalt von 15 bis 27 Gew.-% aufweist, enthält.

Die erfindungsgemäßen thermoplastischen Masterbatche können zu Folien verarbeitet werden, die 0,05 bis 2 Gew.-%, insbesondere 0,05 bis 1,0 Gew.-%, eines pulverförmigen Zeolithen enthalten.

In einer vorzugsweisen Ausführungsform der Erfindung können die thermoplastischen Masterbatche einen pulverförmigen Zeolithen enthalten, dessen Teilchen eine Teilchengröße von 0,5 bis 10 Mikrometer aufweisen, wobei als Bestimmungsmethode z. B. die Coulter Counter-Methode verwendet werden kann. Diese Teilchengröße kann durch die Fällungsverfahren der Zeolithsynthese und/oder nachträglich durch Vermahlen erreicht werden.

Der Begriff Zeolith entspricht der Beschreibung nach D. W. Breck, "Zeolite moleculare sievesr", Wiley Interscience 1974, Seiten 133 bis 180. Die eingesetzten Zeolithe weisen einen Wassergehalt von 15 bis 27 Gew.-% auf.

Als pulverförmigen Zeolithen können die erfindungsgemäßen thermoplastischen Mischungen einen Zeolithen des Typs A enthalten. Der Zeolith A weist die allgemeine Formel

$$1{,}0 \pm 0{,}2\ M_{\frac{2}{n}}O : Al_2O_3 : 2{,}0 \pm 0{,}5\ SiO_2 : y_H2O$$

auf, wobei M ein Metallkation, wie z. B. Natrium- oder Kalium-Kation, n seine Wertigkeit und y ein Wert bis zu 5 bedeuten.

Vorzugsweise können die thermoplastischen Masterbatche einen Zeolithen des Typs A enthalten, welcher nach Verfahren gemäß DE-AS-2 333 068, DE-AS-2 447 021, DE-AS-2 517 218, DE-OS-2 651 485, DE-OS-2 651 446, DE-OS-2 651 436, DE-OS-2 651 419, DE-OS-2 651 420 und/oder DE-OS-2 651 437 hergestellt wird. Der eingesetzte Zeolith A kann auch nach anderen bekannten Verfahren hergestellt werden, z. B. gemäß DE-PS-1 038 017 oder DE-AS-1 667 520.

Vorzugsweise kann der eingesetzte Zeolith A die folgenden physikalisch-chemischen Daten aufweisen:

Kornverteilung (Coulter-Counter):

| | | |
|---|---|---|
| Anteil | < 15 Mikrometer: | 99 - 100 Gew.-% |
| | < 10 Mikrometer: | 95 - 99 Gew.-% |
| | < 1 Mikrometer: | < 5 Gew.-% |
| Glühverlust nach DIN 55 921: | | < 24 % |

Weiterhin können die erfindungsgemäßen thermoplastischen Masterbatche als pulverförmigen Zeolithen einen Zeolithen des Typs Y mit der allgemeinen Formel

$$0{,}9 \pm 0{,}2\ M_{\frac{2}{n}}O : Al_2O_3, : X\ SiO_2 : yH_2O$$

enthalten, wobei M ein Metallkation, wie z. B. Natrium- oder Kaliumkation, n seine Wertigkeit, x ein Wert größer als 3 und y ein Wert bis 9 bedeuten.

Der eingesetzte Zeolith Y kann die folgenden physikalisch-chemischen Kenndaten auweisen:

| | | |
|---|---|---|
| Glühverlust nach DIN 55 921 | | < 27 % |
| Kornverteilung (Coulter-Counter): | | |
| Anteil | < 15 Mikrometer: | 96 - 100 Gew.-% |
| | < 10 Mikrometer: | 85 - 99 Gew.-% |
| | < 1 Mikrometer: | < 20 Gew.-% |

Dieses zeolithische Molekularsiebpulver kann beispielsweise gemäß DE-AS-1 099 929, DE-AS-1 203 239 oder DE-AS-1 253 055 hergestellt werden.

Weiterhin können die erfindungsgemäßen thermoplastischen Masterbatche als pulverförmigen Zeolithen einen Zeolithen des Typs X mit der allgemeinen Formel

$$0{,}9 \pm 0{,}2\ M_{\frac{2}{n}} : Al_2O_3 : 2{,}5 \pm 0{,}5\ SiO_2 : yH_2O$$

enthalten, wobei M ein Metallkation, z. B. Natrium- oder Kaliumkation, n seine Wertigkeit und y ein Wert bis zu 8 bedeuten.

Dieser pulverförmige Zeolith kann nach DE-PS-1 038 016, DE-PS-1 138 383 oder DE-OS-2 028 163 hergestellt werden.

Der eingesetzte Zeolith X kann die folgenden physikalisch-chemischen Daten aufweisen:

| | | |
|---|---|---|
| Glühverlust (DIN 55 921) | | < 27 Gew.-% |
| Korngrößenverteilung (Coulter-Counter): | | |
| Anteil | < 15 Mikrometer: | 96 - 100 Gew.-% |
| | < 10 Mikrometer: | 85 - 99 Gew.-% |
| | < 1 Mikrometer: | 20 Gew.-% |

Vorzugsweise können die erfindungsgemäßen thermoplastischen Masterbatche als pulverförmigen Zeolithen einen Zeolithen des Typs P enthalten. Die Bezeichnung Zeolith P ist synonym mit der Bezeichnung synthetischer Phillipsit und Zeolith B. Beispielsweise kann man den Zeolithen P nach dem Verfahren gemäß der FR-PS-1 213 528 (Bayer AG) herstellen.

Der eingesetzte Zeolith P kann die folgenden physikalisch-chemischen Kenndaten aufweisen:

| | | |
|---|---|---|
| Glühverlust (DIN 55 921) | | < 15 Gew.-% |
| Korngrößenverteilung (Coulter-Counter): | | |
| Anteil | < 15 Mikrometer: | 99 - 100 Gew.-% |
| | < 10 Mikrometer: | 97 - 99 Gew.-% |
| | < 1 Mikrometer: | 20 Gew.-% |

Die erfindungsgemäßen thermoplastischen Masterbatche können weiterhin als pulverförmigen Zeolithen Hydroxysodalith mit der allgemeinen Formel

$$Na_2O \cdot Al_2O_3 \cdot 2\ SiO_2 \cdot 2{,}5\ H_2O$$

enthalten. Hydroxysodalith kann beispielsweise aus Zeolith A mittels Kochen in wäßriger Natronlauge hergestellt werden (vgl. D. W. Breck "Zeolite molecular sieves", Seite 275 [1974] Wiley Interscience Publication).

Der eingesetzte Hydroxysodalith kann die folgenden physikalisch-chemischen Kenndaten aufweisen:

| | | |
|---|---|---|
| Glühverlust (DIN 55 921) | | 15 Gew.-% |
| Korngrößenverteilung (Coulter-Counter): | | |
| Anteil | < 15 Mikrometer: | 99 - 100 Gew.-% |
| | < 10 Mikrometer: | 90 - 99 Gew.-% |
| | < 1 Mikrometer: | 10 Gew.-% |

In einer weiteren Ausführungsform der Erfindung können die erfindungsgemäßen thermoplastischen Masterbatche ein Gemisch aus den angegebenen Zeolithen enthalten. Diese Masterbatche können sowohl durch Mischen der reinen Zeolithe als auch durch direkte Synthese mit hergestellt werden. Masterbatch, welche direkt hergestellt werden können, können Gemische der Zeolithe A und P, der Zeolithe A und X, der Zeolithe A und Hydroxysodalith, der Zeolithe P und X oder der Zeolithe P und Y sein. In einer vorzugsweisen Ausführung können die thermoplastischen Masterbatche ein Gemisch aus Zeolith X und Zeolith P im Verhältnis 80 bis 5 zu 20 bis 95 enthalten.

Ein derartiges Gemisch kann beispielsweise gemäß DE-OS-2 028 153, Seite 15, Tabelle 3, Beispiel 3 mittels eines Fällverfahrens hergestellt werden.

Die erfindungsgemäßen thermoplastischen Masterbatche können Polyäthylen mit den folgenden. Kenndaten enthalten:

| | |
|---|---|
| Dichte: | 0,90 bis 0,95 g/cm$^3$ |
| Schmelzindex: | 3 - 25 g/10 Min. bei 190°C und 2,15 kp Last |

Es können jedoch auch Mischungen aus Polyäthylenen in den erfindungsgemäßen Masterbatchen verwendet werden, und in solchen Mischungen können auch Polyäthylenwachse verwendet werden. Die Polyäthylene können übliche Zusatzstoffe, die normalerweise einverleibt werden, um die Thermoplaste gegen Hitze, Luftsauerstoff und Beeinträchtigung durch Licht widerstandsfähig zu machen, enthalten. Stabilisatoren dieser Art sind unter anderem Ruß, 2,2-Thio-bis(4-methyl-6-tert.-butylphenol), Dilaurylthiodipriopionat wie auch verschiedene andere bekannte Amin- und Phenol-Stabilisatoren.

Die für die Erfindung geeigneten Füllstoffe besitzen eine Teilchengröße von 0,5 bis 20 Mikrometer. Vorzugsweise soll die Teilchengröße des Füllstoffes 0,5 bis 10 Mikrometer betragen. Diese Teilchengröße führt zu stippenfreien Oberflächen mit gutem Antiblocking-Verhalten.

Weitere übliche Zusatzstoffe wie Gleitmittel und Farbstoffe, können die erfindungsgemäßen Masterbatche ebenfalls enthalten.

Aus den erfindungsgemäßen thermoplastischen Masterbatchen können Kunststoff-Folien hergestellt werden, indem man die einzelnen Bestandteile in einer geeigneten Mischvorrichtung, z B. in einem Innenmischer vom Typ "Banbury", bei geeigneter Temperatur miteinander vermischt Anschließend kann der so erhaltene thermoplastische Masterbach durch weitere Zugabe von Kunststoff auf einen Gehalt von 0,05 bis 1 Gew.-% an pulverförmigen Zeolithen gegebenenfalls in derselben Mischvorrichtung verdünnt und z. B. mittels einer Extruder-Blasvorrichtung bei geeigneter Temperatur zu dünnen Folien verblasen werden.

Die erfindungsgemäßen Masterbatche weisen den Vorteil auf, daß sie als Antiblockingmittel einen pulverförmigen Zeolithen enthalten, welcher trotz eines Wassergehaltes von 15 bis 27 Gew.-% bei der Herstellung der thermoplastischen Mischung auch bei Temperaturen von mehr als 170°C keine störenden Gasblasen durch freiwerdenden Wasserdampf in der thermoplastischen Mischung bildet. Diese Eigenschaft macht die Zeolithe den Kieselgelen und Fällungskieselsäuren überlegen, deren physikalisch gebundenes Wasser bei 105°C entweicht und die deshalb vorher auf einen sehr niedrigen Wassergehalt getrocknet und vor Zutritt von Luftfeuchtigkeit durch eine Spezialverpackung geschützt werden müssen. Im Vergleich zu Diatomeenerden betrifft diese Überlegenheit lediglich die Tatsache der Vortrocknung und weniger den Gesichtspunkt der Spezialverpackung.

Die erfindungsgemäßen thermoplastischen Masterbatche können weiterhin einen Gehalt von bis zu 50 Gew.-% des zeolithischen Antiblockingmittels aufweisen, wodurch sich die Raum-Zeitausbeute der teuren Kneteranlage besser ausnutzen und der Herstellprozeß der Antiblockingmittel-Masterbatche wesentlich wirtschaftlicher gestalten läßt. Während sich die Produkte des Standes der Technik z. B. wie Kieselgele und Fällungskieselsäuren aufgrund ihrer höheren Verdickungswirkung in der thermoplastischen Mischung bis maxial 25 - 30 Gew.-% einarbeiten lassen, sind mit Diatomeenerden immerhin Füllungsgrade bis zu 50 Gew.-% zu erzielen. In diesem wichtigen Punkt zeigt sich somit, daß die erfindungsgemäßen Mischungen den Mischungen, die Kieselgele und Fällungskieselsäuren enthalten, deutlich und solchen, die Diatomeenerden enthalten, etwas überlegen sind.

Bei der Beurteilung der Effizienz eines Antiblockingmittels spielt die Dispergierbarkeit desselben in der thermoplastischen Mischung eine entscheidende Rolle. Hierbei zeigt sich die Überlegenheit der Zeolithe als Antiblockingmittel-Komponente der erfindungsgemäßen thermoplastischen Masterbatche. Wegen der hervorragenden Dispergierbarkeit der erfindungsgemäßen zeolithischen Antiblockingmittel wird nicht nur die Knetdauer der thermoplastischen Masterbatch erheblich gekürzt und damit die Raum-Zeitausbeute des Knetvorganges erhöht, sondern es wird auch die Gefahr unterbunden, daß die Antiblockingmittel-Aggregate unter der Einwirkung von Scherkräften des Dispergiergerätes abgebaut werden, was zu einer Verschiebung der mittleren Teilchengröße führt, womit eine Abnahme der Antiblockingwirkung einhergeht.

Entsprechend der Kornstruktur und Freiheit an Grobanteilen des erfindungsgemäß eingesetzten

pulverförmigen Zeolithen entwickelt dieses in der Mischung im Vergleich zu den Produkten des Standes der Technik eine sehr geringe Abrasivität, wodurch der Kneter bei der Herstellung der thermoplastischen Mischungen geschont wird. Dies gilt insbesondere im Vergleich zu den Diatomeenerden, welche als Folge ihres Gehaltes an Quarz eine relativ hohe Abrasivität aufweisen.

Der erfindungsgemäß einsetzbare Zeolith A wurde in umfangreichen inhalationstoxikologischen und toxikologischen Untersuchungen als toxikologisch unbedenklich eingestuft. Obwohl diese Aussage auch für Kieselgele und Fällungskieselsäuren gilt, sind im Gegensatz dazu für die bis zu einigen Prozenten Quarz enthaltenden Diatomeenerden verschärfte Schutzmaßnahmen für das Bedienungspersonal bei der Verarbeitung einzuhalten (MAK-Wert bei 4 $mg/Nm^3$).

Die Feinteiligkeit und Kornverteilung der erfindungsgemäß eingesetzten Zeolithe gewährleistet neben der guten Dispergierbarkeit die Stippenfreiheit und hohe Güte der Oberfläche der Folien. Eine derartig gute Oberflächenstruktur wird von keinem Produkt des Standes der Technik erreicht.

Bei der Verarbeitung im Kneter neigt ein zeolithisches Molekularsiebpulver aufgrund seines hohen Wassergehaltes von 15 bis 27 Gew.-% weniger zum Stauben, wodurch die Arbeitsbedingungen der Umweltschutzbestimmungen entsprechend leicht eingehalten werden können.

Überraschenderweise zeigte sich, daß die erfindungsgemäßen thermoplastischen Masterbatche bzw. die daraus gefertigten Folien nahezu keine Feuchtigkeit aus der Luft aufnehmen.

Die erfindungsgemäßen thermoplastischen Masterbatche werden anhand der folgenden Beispiele näher erläutert und beschrieben:

**Beispiel 1**

Verwendete Polyäthylenmarken

| | for Konzentrat | für Folie |
|---|---|---|
| LUPOLEN®-Marke | 1800 S | 3010 K |
| Dichte [g/cm³] | 0,915 - 0,918 | 0,932 - 0,939 |
| MFI* [g/10 min) | 17 - 22 | 3,4 - 4,6 |

*) Bei 190°C und 2,16 kp Last (DIN 53 735).

**Konzentratherstellung (Masterbatch)**

Auf einem Mischwalzwerk der Firma Schwabenthan (Walzendimension 200 x 400 mm) werden bei einer Temperatur von 130°C und Walzgeschwindigkeiten von 15 bzw. 18 U/Min. 250 g LUPOLEN® 1800 S innerhalb von 5 Minuten geschmolzen. Nachdem sich ein glattlaufendes Walzenfell ergeben hat, werden in weiteren 5 Minuten 250 g Zeolith A in 2 Portionen zugemischt, wobei nach der 1. Portion Zeolith A das Walzenfell zu einer Puppe gerollt und gestürzt wird. Anschließend wird die Mischung unter 5-maligem Stürzen 3 Minuten lang dispergiert und zu einem etwa 2 mm dicken Fell ausgezogen. Die Zerkleinerung des Walzenfelles mit einem Gehalt von 50 % Antiblockingmittel zu Hackgranulat erfolgt auf einer Schneidmühle über ein 6-mm-Sieb.

**Folienherstellung**

Durch einfaches Vermischen der Granulate werden 8 g Konzentrat mit 3992 g LUPOLEN® 3010 K, entsprechend 0,1 % Antiblockingmittel, verdünnt. Die Folienherstellung wird auf einem Extruder mit einer Schnecke von 45 mm Durchmesser und einem Düsendurchmesser von 100 mm vorgenommen. Bei einer Düsentemperatur von 170°C wird eine Folie von etwa 150 mm flachgelegter Breite von 0,04 mm Dicke hergestellt.

**Prüfungen**

**Prüfungen am Konzentrat**

Über die durch die Antiblockingmittel verursachte Änderung des rheologischen Verhaltens der Polymerschmelzen gibt der Schmelzindex MFI Auskunft. Die Messung erfolgt nach DIN 53 735. Als Prüfbedingung wurde eine Temperatur von 190°C und eine Belastung von 5 kp gewählt. Es wird angestrebt,

daß der Schmelzindex des Konzentrates in der gleichen Größenordnung oder höher als der Schmelzindex des für die Folienherstellung eingesetzten LDPE (im vorliegenden Beispiel 11 g/10 min bei einer erhöhten Prüflast von 5 kp anstatt 2,16 kp) liegt.

**Prüfungen an den Folien**

Unter Blocking versteht man die Eigenschaft zweier sich gleichmäßig berührender Folien, sich nur unter Aufwendung mehr oder weniger großer Kraft wieder trennen zu lassen. Die Messung kann in einem Schälversuch durch Messung der zum Auseinanderziehen erforderlichen Kraft erfolgen. Ein weiteres Maß für die Blockingeigenschaften ist der Gleitreibungskoeffizient. Diese Größe ist genaugenommen ein Maß für die Verschieblichkeit zweier sich berührender Folien, liefert aber brauchbare Maßzahlen im Vergleich zu Trennversuchen von Hand.

Der Schälversuch wird in Anlehnung an ASTM-D 1893 durchgeführt. Dazu werden Folienpaare von der Größe 250 x 120 mm zusammengelegt, mit 20 g/cm$^2$ belastet und bei 60° C 24 Std. gelagert. Mit Hilfe der in der ASTM-D 1893 beschriebenen Vorrichtung werden die Folien anschließend getrennt, indem sie über einen Stab gezogen werden, der sich zwischen die sich berührenden Flächen schiebt. Die dazu benötigte Kraft wird als Blocking-Kraft bezeichnet und in Gramm gemessen.

Eine Messung des Gleitreibungskoeffizienten wird in Anlehnung an DIN 53 375 vorgenommen. Dazu wird ein Folienstreifen von 200 x 300 mm auf eine Glasplatte aufgespannt, ein weiteres Folienstück von 50 x 50 mm aufgelegt, belastet und mit einem Vorschub von 100 mm/min abgezogen. Als Belastungsgewicht dient ein Metallzylinder mit einer Andruckfläche von 10 cm$^2$ und einem Gewicht von 200 g. Der Reibungskoeffizient ergibt sich aus der Division von Zugkraft/Anpreßkraft.

**Prüfergebnisse**

Tablle 1

| | Schmelzindex MFI®) [g/10 min] | Blockingkraft [g] | Gleitreibungskoeffizient |
|---|---|---|---|
| Konzentrat | 16 | - | - |
| LUPOLEN® 3010 K | 11 | | |
| Folie ohne Zusatz | | 35 | 1,3 |
| Folie mit 0,1 % Zeolith A | | 0 | 0,7 |

*) Gemessen bei 190° C und 5 kp Last.

Die ermittelten Ergebnisse lassen erkennen, daß der Zeolith A die Blocking-Kraft völlig aufhebt und den Gleitreibungskoeffizienten beträchtlich verringert.

**Beispiel 2**

**Probenherstellung**

Nach der in Beispiel 1 beschriebenen Arbeitsmethode werden die Zeolithe A und P mit der Fällungskieselsäure und dem Kieselgel Syloid® 244 verglichen. Hierzu werden zunächst Konzentrate mit je 20 % der genannten Produkte hergestellt. Die Verringerung der Konzentration erfolgte mit Rücksicht auf die Vergleichsprodukte. Zur Folienherstellung wird anstelle von LUPOLEN® 3010 K das LDPE LUPOLEN® 2430 H verwendet.

| | LUPOLEN® 2430 H |
|---|---|
| Dichte g/cm$^3$ | 0,923 - 0,925 |
| MFI*) g/10 min | 1,6 - 2,2 |

*) Bei 190° C und 2,16 kp Last.

**Prüfergebnisse**

Tabelle 2

| Antiblocking-Mittel | Konzentrat Konzentration [%] | MFI*) [g/10 min] | Folien Konzentration [%] | Gleitreibungskoeffizient |
|---|---|---|---|---|
| Ohne | - | **) | - | 1,3 |
| Zeolith P | 20 | 48 | 0,1 | 0,7 |
| Zeolith A | 20 | 43 | 0,1 | 0,6 |
| Fällungskieselsäure | 20 | 12 | 0,1 | 0,5 |
| Syloid® 244 | 20 | 2,5 | 0,1 | 0,6 |

*) Gemessen bei 190° C und 5 kp Last.
**) LUPOLEN® 2430 H: MFI = 6 [g/10 min]

Die in der Tabelle 2 aufgeführten Meßwerte zeigen, daß auch bei diesem LDPE sehr gute Antiblockingeigenschaften durch Einsatz der Zeolithe erhalten werden. Die Zahlen für die Schmelzindices der Konzentrate lassen außerdem das stark verbesserte Fließverhalten im Vergleich zur Fällungskieselsäure und besonders zum Kieselgel Syloid® 244 erkennen.

**Beispiel 3**

**Probenherstellung**

Nach der in Beispiel 1 beschriebenen Arbeitsweise werden Konzentrate mit je 30 % folgender Produkte hergestellt.

Zeolith A, Zeolith P, Zeolith X, Zeolith Y, Hydroxysodalith, Diatomeenerde Celite Superfloss®, Fällungskieselsäure, Kieselgel Syloid® 385.

Tabelle 3 **Prüfergebnisse**

| Antiblockingmittel | Konzentrat Konzentration [%] | MFI*) [g/10 min] | Folie Konzentration [%] | Gleitreibungskoeffizient |
|---|---|---|---|---|
| Ohne | - | **) | - | 1,0 |
| Zeolith A | 30 | 34 | - | - |
| Zeolith A | | - | 0,1 | 0,5 |
| Zeolith A | | - | 1,0 | 0,4 |
| Zeolith P | 30 | 35 | | - |
| Zeolith P | | - | 0,1 | 0,65 |
| Zeolith P | | - | 1,0 | 0,5 |
| Zeolith X | 30 | 24 | | - |
| Zeolith X | | - | 0,1 | 0,55 |
| Zeolith X | | - | 1,0 | 0,45 |
| Zeolith Y | 30 | 32 | | - |
| Zeolith Y | | - | 0,1 | 0,7 |
| Zeolith Y | | - | 1,0 | 0,45 |
| Hydroxysodalith | 30 | 31 | | - |
| Hydroxysodalith | | - | 0,1 | 0,5 |
| Hydroxysodalith | | - | 1,0 | 0,4 |
| Ceite Superfloss® | 30 | 20 | | - |
| Ceite Superfloss® | | - | 0,1 | 0,6 |
| Ceite Superfloss® | | - | 1,0 | 0,5 |
| Fällungskieselsäure | 30 | 1,8 | | - |
| Fällungskieselsäure | | - | 0,1 | 0,5 |
| Fällungskieselsäure | | - | 1,0 | 0,4 |
| Syloid® 385 | 30 | 2,0 | | - |
| Syloid® 385 | | - | 0,1 | 0,5 |
| Syloid ® 385 | | | 1,0 | 0,4 |

*) Gemessen bei 190° C und 5 kp Last.
**) LUPOLEN® 2430 H: MFI = 6 g/10 min.

Die in Tabelle 3 zusammengefaßten Ergebnisse zeigen wiederum die sehr gute Wirksamkeit der beanspruchten Produkte als Antiblockingmittel und das vorteilhafte Verhalten in Hinsicht auf geringe Schmelzviskosität (geringe Verdickungswirkung).

**Beispiel 4**

**Probenherstellung**

Zur Ermittlung des höchstmöglichen Füllungsgrades werden Konzentrate von 20 bis 70 % der Produkte Zeolith A, Fällungskieselsäure, Kieselgel, Syloid® 385 und Diatomeenerde Celite Superfloss® hergestellt.

Tabelle 4

| MFI*) [g/10 min] Konzentration | Zeolith A | Fällungskieselsäure | Syloid® 385 | Celite Superfloss® |
|---|---|---|---|---|
| 20 | 43 | 10 | 11 | 35 |
| 30 | 34 | 1,8 | 2,0 | 20 |
| 40 | 25 | < 0,1 | < 0,1 | 11,5 |
| 50 | 16 | | | 6,5 |
| 60 | 7,5 | | | 2,3 |
| 70 | 1,7 | | | 0,1 |

*) Gemessen bei 190°C und 5 kp Last.

In Tabelle 4 ist deutlich die Überlegenheit von Zeolith A gegenüber den Vergleichsprodukten festzustellen.

Zur Antiblocking-Ausrüstung von Polyäthylen mit einem MFI von 6 [g/10 min] (z. B. LUPOLEN® 2430 H) ergeben sich also aus Tabelle 4 folgende Grenzkonzentrationen für das Antiblockingmittel im Konzentrat:

| Antiblockingmittel | Grenzkonzentration [%] |
|---|---|
| Zeolith A | 60 |
| Fällungskieselsäure | 20 - 30 |
| Syloid® 385 | 20 - 30 |
| Celite Superfloss® | 50 |

Die in den Beispielen verwendete Kieselsäure ist eine Fällungskieselsäure mit den folgenden physikalisch-chemischen Kenndaten:

| | |
|---|---|
| Trocknungsverlust nach DIN 55 921: | 2,5 Gew.-% |
| Glühverlust nach DIN 55 921: | 5,0 Gew.-% |
| pH-Wert nach DIN 53 200: | 7 |
| Stampfdichte nach DIN 53 194: | 110 g/l |
| Mittlere Agglomeratteilchengröße: | 3 Mikrometer |

Das in den Beispielen verwendete Kieselgel Syloid® 385 weist die folgenden physikalisch-chemischen Kenndaten auf:

| | |
|---|---|
| Teilchengröße: | 5 Mikrometer |
| BET-Oberfläche: | 400 $m^2$/g |
| Schüttgewicht: | 15 kg/100 l |
| Glühverlust: | 6 % |
| pH-Wert: | 3 |

Das in den Beispielen verwendete Kieselgel Syloid® 244 weist die folgenden physikalisch-chemischen Kenndaten auf:

| | |
|---|---|
| Teilchengröße: | 4 Mikrometer |
| BET-Oberfläche: | 300 $m_2$/g |
| Schüttgewicht: | 10 kg/100 l |
| Glühverlust: | 7 % |
| pH-Wert: | 7 |

Der in den Beispielen eingesetzte Zeolith A wird gemäß DE-OS-2 651 436 hergestellt.

Der in den Beispielen eingesetzte Zeolith X wird gemäß DE-PS-1 038 016 hergestellt und anschließend in einer Stiftmühle gemahlen.

Der in den Beispielen eingesetzte Zeolith Y wird gemäß DE-PS-1 098 929 hergestellt und anschließend in einer Stiftmühle vermahlen.

Der in den Beispielen eingesetzte Zeolith P wird gemäß FR-PS-1 213 628 hergestellt.

Der in den Beispielen eingesetzte Hydroxysodalith wird aus einem Zeolith A gemäß DE-OS-2 447 021 durch dreitätiges Kochen mit NaOH (20 %-ig) hergestellt. Das Produkt wird abfiltriert, gewaschen, getrocknet und auf einer Stiftmühle vermahlen.

Die Korngrößenverteilung der eingesetzten Zeolithen, ermittelt mittels Coulter-Counter, ist in den Figuren 1 bis 5 aufgezeigt.

Fig. 1 zeigt die Korngrößenverteilung des in Beispiel 2 und 3 eingesetzten Zeolithen P;

Fig. 2 zeigt die Korngrößenverteilung des in den Beispielen 1, 2, 3 und 4 eingesetzten Zeolithen A;
Fig. 3 zeigt die Korngrößenverteilung des in dem Beispiel 3 eingesetzten Zeolithen X;
Fig. 4 zeigt die Korngrößenverteilung des in Beispiel 4 eingesetzten Zeolithen Y;
Fig. 5 zeigt die Korngrößenverteilung des in Beispiel 4 eingesetzten Hydroxysodaliths.

**Patentanspruch**

Thermoplastischer Masterbatch zur Herstellung von Kunststoffolien mit Antiblocking-Eigenschaften auf Basis von Polyäthylen, dadurch gekennzeichnet

daß er 20 bis 60 Gew.-% eines synthetischen, pulverförmigen Zeolithen des Typs A, des Typs Y, des Typs X, des Typs P und/oder des Typs Hydroxysodalith, welcher eine Teilchengröße von 0,5 bis 20 Mikrometer und einen Wassergehalt von 15 bis 27 Gew.-% aufweist, enthält.

**Claim**

A thermoplastic master batch for the production of anti-blocking plastics films based on polyethylene, characterized in that it contains 20 to 60 % by weight of a synthetic, powder-form zeolite of type A, type Y, type X, type P and/or of the hydroxysodalite type which has a particle size of 0.5 to 20 micrometers and a water content of 15 to 27 % by weight.

**Revendication**

Mélange maître de matière thermoplastique pour l'obtention de feuilles de matière plastique ayant des propriétés anti-blocage à base de polyéthylène, caractérisé en ce qu'il contient de 20 à 60 % en poids d'une zéolite synthétique pulvérulente, du type A, du type Y, du type X, du type P et/ou du type hydroxysodalite, laquelle possède une taille de particules de 0,5 à 20 micromètres et une teneur en eau de 15 à 27 % en poids.